# EUROPÄISCHE PATENTANMELDUNG

(11) **EP 1 302 098 A1**
(43) Veröffentlichungstag der Anmeldung: **16.04.2003**
(21) Anmeldenummer: 01124073.6
(22) Anmeldetag: 10.10.2001
(51) Int. Cl.: A01G 9/10, B65D 1/30

(54) **Kastenförmige Steige**

(71) Anmelder: W. u. H. Fernholz (GmbH & Co. KG), 58540 Meinerzhagen (DE)
(72) Erfinder: Fernholz, Helmut, 58540 Meinerzhagen (DE)
(74) Vertreter: Hassler, Werner, Dr.

(57) **Zusammenfassung**

Eine kastenförmige Steige in Form eines Folientiefziehteils umfassend zwei am Oberrand durch Stege miteinander verbundene Rechteckbehälter, wobei zwischen den Stegen Rinnen mit Schwächungslinien im Rinnenboden ausgebildet sind. Das technische Problem ist eine Ausbildung einer derartigen Steige, daß dieselbe in mindestens zwei Rechteckbehälter leicht teilbar unter Beibehaltung der Querstabilität und Verwindungssteifigkeit der kastenförmigen Steige ist. Die Stege (3, 3') weisen einen U-förmigen Querschnitt mit senkrecht abgewinkelten Schenkeln (12 ) auf, und die Schwächungslinien (8) sind als Perforationen ausgebildet.

## Beschreibung

Die Erfindung betrifft eine kastenförmige Steige in Form eines Folientiefziehteils umfassend zwei am Oberrand durch Stege miteinander verbundene Rechteckbehälter, wobei zwischen den Stegen Rinnen mit Schwächungslinien im Rinnenboden ausgebildet sind.

Derartige kastenförmige Steigen oder Behälter dienen zur Aufnahme von Verkaufseinheiten wie Topfpflanzen. Bei der Lagerung und beim Transport sollen möglicht viele Verkaufseinheiten in einer Steige Platz finden. Jedoch soll ein Verkauf auch in kleineren Gebinden möglich sein. Die Steige soll insbesondere die Handhabbarkeit von Topfpflanzen verbessern.

Die AT PS 337 080 beschreibt eine Steige, bei der die Schwächungslinien in gleicher Höhe und gleicher Profilierung innerhalb des in Längsrichtung im wesentlichen ebenen Rinnenbodens liegen. Damit verliert die Rinne deutlich an Querstabilität, was für die Handhabung der Steigen nachteilig ist.

Die DE 199 49 218 A1 beschreibt eine Steige der gattungsgmeßen Art, bei der der Rinnenboden eine wellenförmige Profilierung aufweist und daß die Schwächungsstellen als Perforationen ausgebildet sind. Dadurch wird zwar eine Verbesserung der Querstabilität erreicht, jedoch leidet die Verwindungssteifigkeit.

Daher besteht die Aufgabe, eine derartige Steige in mindestens zwei Rechteckbehälter leicht teilbar unter Beibehaltung der Querstabilität und Verwindungssteifigkeit der kastenförmigen Steige auszubilden.

Diese Aufgabe wird nach der Erfindung dadurch gelöst, daß die Stege einen U-förmigen Querschnitt mit senkrecht abgewinkelten Schenkeln aufweisen und daß die Schwächungslinien als Perforationen ausgebildet sind.

Die Erfindung unterscheidet sich insofern vom Stand der Technik, als die Stege mit U-Querschnitt ein stabile Verbindung ergeben, die eine hohe Verwindungssteifigkeit und ein hohes Widerstandsmoment bedingen. Dieses wird insbesondere durch die Schenkel der Stege erreicht, die senkrecht zur Fläche der Steige ausgerichtet sind. Beim Transport der Steige und beim Aufstellen auf eine Lagerplatte eines Regals oder Wagens haben die Stege durch diese Schenkel ein so hohes Widerstandsmoment, daß die Verbindung nicht abknickt. Trotzdem ist ein müheloses Trennen der beiden Rechteckbehälter durch Aufreißen der Perforation möglich.

Ein leichtes Trennene ergibt sich dadurch, daß die Schwächungslinien als Stanzlinien ausgebildet sind.

Die Trennung wird dadurch verbessert, daß die endständigen Stege in einen Flansch mit einem Einschnitt auslaufen.

Eine verbesserte Handhabung und Trennung ergibt sich dadurch, daß die Rinnenwände etwa senkrecht zur Fläche der Stege ausgerichtet sind.

Ein Ausführungsbeispiel wird anhand der Zeichnung erläutert, in der darstellen:
Fig. 1 eine Draufsicht auf eine kastenförmige Steige und
Fig. 2 einen Schnitt nach der Linie II-II in Fig. 1.

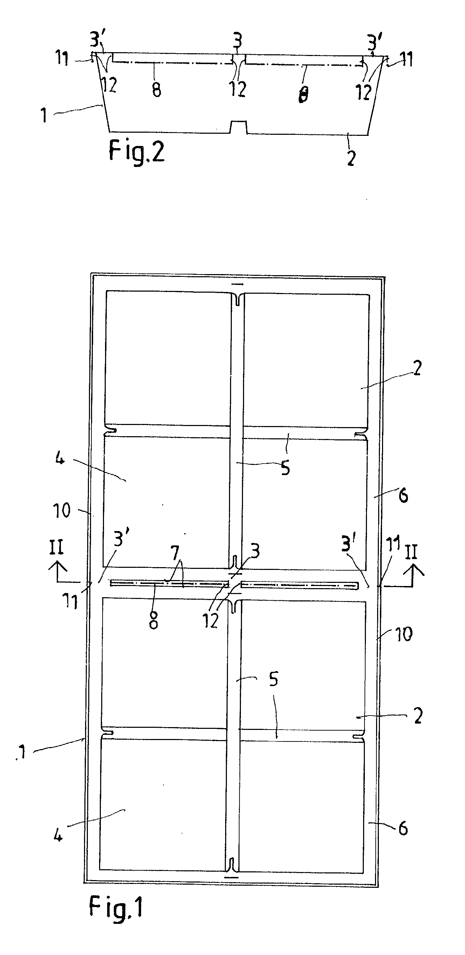

Fig. 1 zeigt eine kastenförmige Steige 1 in Form eines Folientiefziehteils aus zwei Rechteckbehältem 2, die durch einen Steg 3, 3' miteinander verbunden sind. Jeder Rechteckbehälter 2 oder Einzelbehälter hat in der Bodenwand 4 kreuzförmig angeordnete, sickenförmige Rippen 5 zur Verstärkung und Versteifung, so daß vier Einzelaufnahmen vorhanden sind. Ebenfalls zur Verstärkung ist ein oberer umlaufender Randsteg 6 ausgebildet.

Zwischen den Stegen 3, 3' verlaufen Rinnen 7 mit U-förmigem Querschnitt, deren Rinnenwände 9 senkrecht zur Fläche der Stege 3, 3' ausgerichtet sind . Die Stege 3, 3' haben senkrecht zur Fläche der Stege bzw. der Steige ausgerichtete Schenkel 12, so daß sich ein steifer U-Querschnitt ergibt. Im Rinnenboden sind Schwächungslinien 8 vorgesehen, die als Perforationslinien oder als Stanzlinien ausgebildet sind. Im Anschluß an die endständigen Stege 3' sind in dem Flansch 10 Stanzschnitte 11 ausgebildet.

Die Stege 3, 3' mit U-Querschnitt stellen eine stabile und steife Verbindung der beiden Rechteckbehälter dar. Dadurch werden Zugbelastungen und Druckbehlastungen in Querrichtung der Rinne 7 aufgenommen, so daß die Verbindung eine hohe Steifigkeit, ein hohes Widerstandsmoment und eine hohe Verwindungssteifigkeit hat.

Bei der Handhabung der mit Topfpflanzen bestückten Steige 1 durch Anfassen der Rechteckbahälter 2 an den Randstegen 6 bleiben dieselben horizontal aufeinander ausgerichtet. Ein Abknicken der Recheckbehälter ist durch die Stege 3, 3' mit U-förmigem Querschnitt ausgeschlossen. Damit läßt sich die Steige sicher handhaben und transportieren, wenn sie mit Topfpflanzen bestückt ist.

Infolge der Stanzlinien 8, 11 lassen sich die Rechteckbehälter 2 durch einen zusätzlichen Druck leicht auseinanderbrechen und voneinander trennen, so man kleinere Gebinde erhält.

## Patentansprüche

1. Kastenförmige Steige in Form eines Folientiefziehteils umfassend zwei am Oberrand durch Stege miteinander verbundene Rechteckbehälter, wobei zwischen den Stegen Rinnen mit Schwächungslinien im Rinnenboden ausgebildet sind, **dadurch gekennzeichnet, daß** die Stege (3, 3') einen U-förmigen Querschnitt mit senkrecht abgewinkelten Schenkeln (12) aufweisen und daß die Schwächungslinien (8) als Perforationen ausgebildet sind.

2. Steige nach Anspruch 1, **dadurch gekennzeichnet, daß** die Schwächungslinien (8) als Stanzlinien ausgebildet sind.

3. Steige nach Anspruch 1 oder 2, **dadurch gekennzeichnet, daß** die endständigen Stege (3') in einen Flansch (10) mit einem Einschnitt bzw. Stanzschnitt (11) auslaufen.

4. Steige nach einem der Ansprüche 1 bis 3, **dadurch gekennzeichnet, daß** die Rinnenwände (9) etwa senkrecht zur Fläche der Stege (3, 3') ausgerichtet sind.
